(19) Europäisches Patentamt
European Patent Office
Office européen des brevets

(11) **EP 3 028 378 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(51) Int Cl.:
***H02P 1/46*** (2006.01)

(21) Anmeldenummer: **14744071.3**

(22) Anmeldetag: **24.07.2014**

(86) Internationale Anmeldenummer:
**PCT/EP2014/065892**

(87) Internationale Veröffentlichungsnummer:
**WO 2015/014701 (05.02.2015 Gazette 2015/05)**

(54) **VERFAHREN ZUM EINSCHALTEN UND ZUM AUSSCHALTEN EINER N-PHASIGEN ELEKTRISCHEN MASCHINE IN EINEM KRAFTFAHRZEUG**

METHOD FOR SWITCHING ON AND SWITCHING OFF AN N-PHASE ELECTRIC MOTOR IN A MOTOR VEHICLE

PROCÉDÉ DE MISE SOUS TENSION ET DE MISE HORS TENSION D'UN MOTEUR ÉLECTRIQUE À N PHASES DANS UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2013 DE 102013215306**

(43) Veröffentlichungstag der Anmeldung:
**08.06.2016 Patentblatt 2016/23**

(73) Patentinhaber:
• **Robert Bosch GmbH**
**70442 Stuttgart (DE)**
Benannte Vertragsstaaten:
**AL AT BE BG CH CY CZ DE DK EE FI FR GB GR HR HU IE IS IT LI LT LU LV MC MK MT NL NO PL PT RO RS SE SI SK SM TR**
• **SEG Automotive Germany GmbH**
**70499 Stuttgart (DE)**

(72) Erfinder:
• **ERSEK, Zoltan**
**70191 Stuttgart (DE)**
• **ROESNER, Julian**
**74199 Untergruppenbach (DE)**

(56) Entgegenhaltungen:
**DE-A1-102010 002 390     US-A- 4 746 850**

**Beschreibung**

Die vorliegende Erfindung betrifft ein Verfahren zum Einschalten und ein Verfahren zum Ausschalten einer n-phasigen elektrischen Maschine in einem Kraftfahrzeug.

Stand der Technik

Elektrische Maschinen können in Kraftfahrzeugen zur Umwandlung mechanischer Energie in elektrische Energie genutzt werden. Derartige fremderregte, elektrische Maschinen können dabei beispielsweise als Klauenpolgeneratoren ausgebildet sein. Derartige elektrische Maschinen können einen mehrphasigen Drehstrom erzeugen. Elektrische Maschinen können dabei einen Läufer mit einer Erregerwicklung (Läuferwicklung) und einen Stator mit einer mehrphasigen Statorwicklung aufweisen. Mittels eines der Statorwicklung nachgeschalteten Gleichrichters kann ein mehrphasiger Drehstrom in einen Gleichstrom gerichtet werden und beispielsweise in ein Gleichspannungs-Bordnetz des Kraftfahrzeugs eingespeist werden.

Beispielsweise in Hybridfahrzeugen können elektrische Maschinen auch motorisch betrieben werden und als Antrieb des Hybridfahrzeugs eingesetzt werden. Die elektrische Maschine kann dabei einen Verbrennungsmotor des Kraftfahrzeugs insbesondere bei niedrigen Drehzahlen, bei denen dieser Verbrennungsmotor noch nicht sein volles Drehmoment liefert, unterstützen (Boostbetrieb, Turboloch-Kompensation).

Eine Regelung der elektrischen Maschine kann in beiden Betriebsarten mittels eines Erregerstroms durch die Erregerwicklung oder mittels eines Phasenstroms durch die Statorwicklungen als Regelgröße erfolgen.

Eine Nutzung der elektrischen Maschine insbesondere als Antrieb in einem Fahrzeug kann ein häufiges Ein- und Ausschalten der elektrischen Maschine erfordern. Als problematisch kann sich das Ein- und Ausschalten der elektrischen Maschine insbesondere bei hohen Drehzahlen erweisen. Wird dabei zuerst die Phasenspannung eingeschaltet, kann es zu hohem Überschwingen des Phasenstroms kommen. Wird zuerst eine Erregerspannung eingeschaltet, wird in dem Stator zunächst eine Polradspannung induziert, welche negativ mit der später einzuschaltenden Phasenspannung wechselwirken kann, was zu hohen elektrischen und mechanischen Belastungen der elektrischen Maschine führen kann.

Es ist daher wünschenswert, eine Möglichkeit anzugeben, das Ein- und Ausschalten einer elektrischen Maschine eines Kraftfahrzeugs zu optimieren, um unerwünschte Stromspitzen und damit verbundene elektrische und mechanische Belastungen zu vermeiden.

In einem motorischen Antrieb mit einem lastkommutierten Inverter, wird der Motor von einer Ruheposition gestartet, in dem die Rotorwicklung mit einem Feldstrom konstanter Modulationsrate beaufschlagt wird, um eine Spannung im Stator zu induzieren, deren Vorzeichen zur Rotorpositionsbestimmung ermittelt wird.

In US4746850 ist ein Startverfahren für einen dreiphasigen Synchronmotor gezeigt, in dem ein Thyristorpaar eingeschaltet wird, wenn die in einer Statorwicklung vom Rotorfeld induzierte Spannung eine bestimmte Polarität aufweist.

Offenbarung der Erfindung

Erfindungsgemäß werden ein Verfahren zum Einschalten und ein Verfahren zum Ausschalten einer n-phasigen elektrischen Maschine in einem Kraftfahrzeug mit den Merkmalen der unabhängigen Patentansprüche vorgeschlagen. Vorteilhafte Ausgestaltungen sind Gegenstand der Unteransprüche sowie der nachfolgenden Beschreibung.

Vorteile der Erfindung

Im Zuge der Erfindung wird ein optimaler Schaltzeitpunkt zum Ein- bzw. Ausschalten der elektrischen Maschine bestimmt. Dabei wird ein eine Polradspannung beeinflussender Parameter ausgewertet. Die Polradspannung ist eine fiktive Hilfsgröße. Bei leerlaufender Maschine entspricht sie der Spannung, die von der bestromten Läuferwicklung bzw. Erregerwicklung (Polrad) in der Ständerwicklung induziert wird. Durch diese Auswertung wird ein optimaler Zeitpunkt bestimmt, zu welchem eine Phasenspannung an die Statorwicklung angelegt (beim Einschalten der elektrischen Maschine) bzw. von der Statorwicklung getrennt (beim Ausschalten der elektrischen Maschine) wird. Dieser Zeitpunkt wird derart bestimmt, dass keine unerwünschten Stromspitzen entstehen. Somit werden beim Ein- und Ausschalten der elektrischen Maschine hohe elektrische und mechanische Belastungen vermieden.

Die erfindungsgemäßen Verfahren ermöglichen es somit, die elektrische Maschine unabhängig von einer Drehzahl der elektrischen Maschine und/oder einer Brennkraftmaschine des Kraftfahrzeugs ein- und auszuschalten. Insbesondere ermöglicht es die Erfindung, die elektrische Maschine bei hohen Drehzahlen auf schonende Weise ein- und auszuschalten.

Die Erfindung eignet sich dabei gleichermaßen für einen generatorischen als auch einen motorischen Betrieb der elektrischen Maschine. Die Erfindung eignet sich für sämtliche Arten von Kraft- und Nutzfahrzeugen, insbesondere auch für Hybridfahrzeuge.

Insbesondere wird durch die Erfindung ermöglicht, die elektrische Maschine motorisch zu betreiben und die Brennkraftmaschine zu unterstützen. Auch bei hohen Drehzahlen kann die elektrische Maschine dabei problemlos und ohne große Belastungen eingeschaltet werden. Dabei muss beispielsweise nicht abgewartet werden, bis die Drehzahl einen zulässigen Grenzwert unterschreitet, um die elektrische Maschine einzuschalten. Die elektrische Maschine kann zu einem zweckmäßigen bestmöglichen Zeitpunkt eingeschaltet werden.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung des Verfahrens in Form von Software ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Kurze Beschreibung der Zeichnungen

Figur 1    zeigt schematisch eine Brennkraftmaschine und eine elektrische Maschine eines Kraftfahrzeugs, die zur Durchführung einer Ausführungsform der Erfindung eingerichtet sind.

Figur 2    zeigt schaltplanartig eine fünf-phasige elektrische Maschine eines Kraftfahrzeugs, die dazu eingerichtet ist, eine Ausführungsform der Erfindung durchzuführen.

Figur 3    zeigt schematisch ein einphasiges Ersatzschaltbild der fünf-phasigen elektrischen Maschine aus Figur 2.

Figur 4    zeigt schematisch eine bevorzugte Ausführung eines erfindungsgemäßen Verfahrens zum Einschalten als auch zum Ausschalten einer elektrischen Maschine als ein Blockschaltbild.

Figur 5    zeigt schematisch Zeigerdiagramme, die im Zuge einer Ausführungsform der Erfindung bestimmt werden können.

Ausführungsform(en) der Erfindung

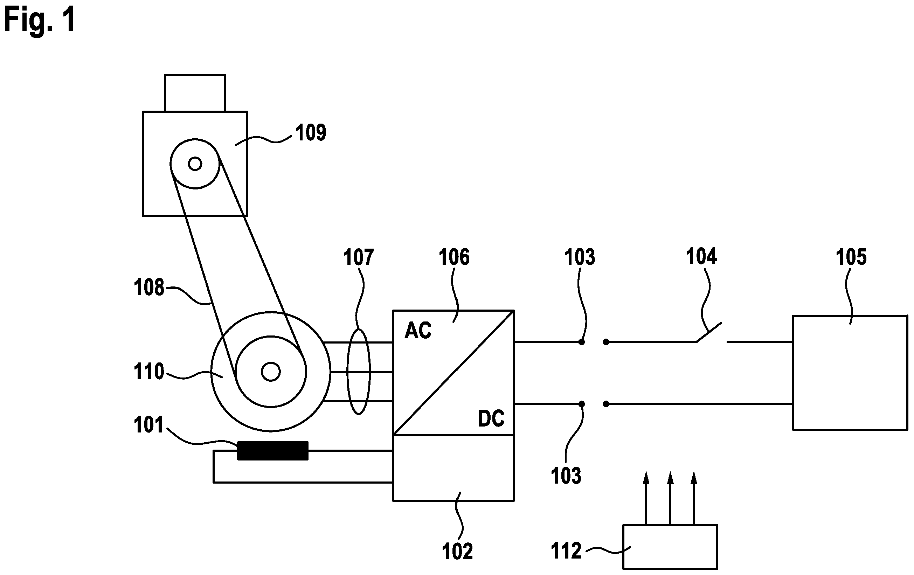

Figur 1 zeigt schematisch Komponenten eines Kraftfahrzeugs. Das Kraftfahrzeug weist dabei eine elektrische Maschine 110 auf, wobei im Folgenden beispielsweise von einem fremderregten Synchrongenerator ausgegangen wird. Die elektrische Maschine 110 kann über eine Brennkraftmaschine 109 des Kraftfahrzeugs beispielsweise generatorisch betrieben werden. Die elektrische Maschine 110 ist über entsprechende Kopplungsmittel, beispielsweise eine mechanische Verbindung 108 in Form eines Riemenantriebs oder einer Welle, mit der Brennkraftmaschine 109 drehmomentschlüssig verbunden. Alternativ kann die elektrische Maschine 110 auch motorisch betrieben werden und kann dabei die Brennkraftmaschine 109 unterstützen.

Die elektrische Maschine 110 ist elektrisch mit einem Stromrichter 106 verbunden, wobei mehrere Phasenanschlüsse 107 vorgesehen sind. Der Stromrichter kann als Gleich- und als Wechselrichter betrieben werden. Die n Phasenanschlüsse 107 sind dabei Phasenanschlüsse einer n-phasigen Statorwicklung eines Stators der elektrische Maschine 110. Gleichspannungsseitig ist über einen Feldregler 102 eine Läuferwicklung 101 der elektrischen Maschine 110 angeschlossen. Der Feldregler 102 ist für die Ansteuerung der Läuferwicklung 101 zuständig. Über Gleichspannungsanschlüsse 103 kann ein Energiespeicher, beispielsweise eine Fahrzeugbatterie 105, an die Gleichspannungsseite des Stromrichters 106 angebunden werden. Über ein Schaltelement 104 kann die Fahrzeugbatterie 105 an die Gleichspannungsseite des Stromrichters 106 angebunden und von dieser getrennt werden.

Eine als Steuergerät 112 ausgebildete Recheneinheit ist, insbesondere programmtechnisch, dazu eingerichtet, eine Ausführungsform der Erfindung durchzuführen. Insbesondere steuert das Steuergerät 112 den Feldregler 102, den Stromrichter 106 und das Schaltelement 104 entsprechend der Erfindung an.

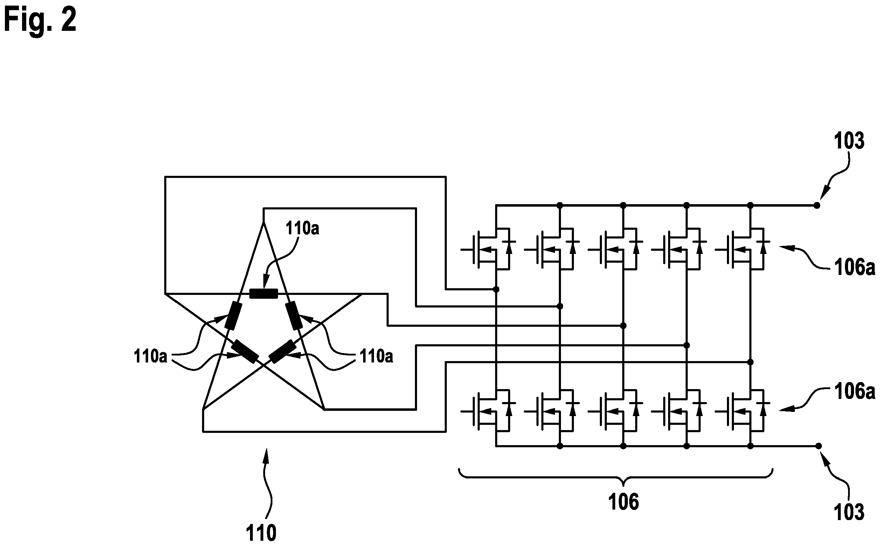

In Figur 2 ist die elektrische Maschine 110 schaltplanartig dargestellt. Die elektrische Maschine 110 ist in diesem speziellen Beispiel als eine fünf-phasige elektrische Maschine dargestellt. Die elektrische Maschine 110 weist dabei einen Stator mit einer fünf-phasigen Statorwicklung 110a auf. Der Stromrichter 106 weist mehrere elektrische Schaltelemente auf, die in diesem speziellen Beispiel als MOSFETs 106a (Metall-Oxid-Halbleiter-Feldeffekttransistor) ausgebildet sind. MOSFETs bestehen aus einem Transistor und einer in Sperrrichtung geschalteten Inversdiode. Die MOSFETs 106a sind beispielsweise über Stromschienen mit der n-phasigen Statorwicklung 110a einerseits und Gleichspannungsseitig mit den Gleichspannungsanschlüssen 103 verbunden.

Wird die elektrische Maschine 110 in einem generatorischen Betrieb betrieben, wird in der Statorwicklung 110a eine fünf-phasige Wechselspannung, die sogenannte Phasenspannung, erzeugt. Durch zweckmäßiges getaktetes Ansteuern der MOSFETs 110a wird diese fünf-phasige Wechselspannung in eine Gleichspannung gerichtet. Mittels dieser umgewandelten Gleichspan-

nung kann beispielsweise die Fahrzeugbatterie 105 aufgeladen werden.

Wird die elektrische Maschine 110 in einem motorischen Betrieb betrieben, wird durch zweckmäßiges getaktetes Ansteuern der MOSFETs 110a die Gleichspannung der Fahrzeugbatterie 105 in die fünf-phasige Phasenspannung gewandelt. Das zweckmäßige, getaktete Ansteuern der MOSFETs 110a erfolgt dabei jeweils durch das Steuergerät 112.

Es sei angemerkt, dass die vorliegende Erfindung nicht auf eine fünf-phasige elektrische Maschine beschränkt sein soll, sondern für elektrische Maschinen mit einer zweckmäßigen Anzahl an Phasenanschlüsse 107 geeignet ist.

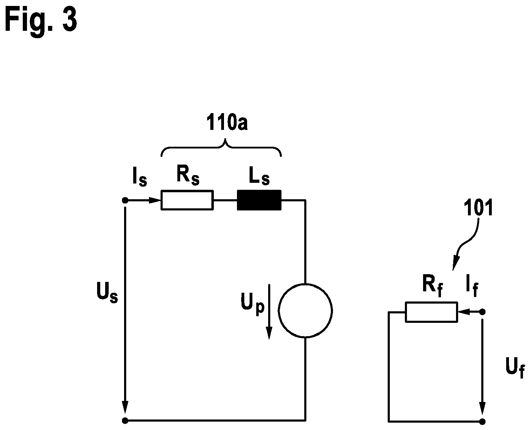

Bevorzugte Ausführungen der Erfindung zum Ein- und Ausschalten der elektrischen Maschine 110 werden im Folgenden in Bezug auf die Figuren 3, 4 und 5 beschrieben. Weiterhin erfolgt diese Beschreibung anhand des speziellen Beispiels eines motorischen Betriebs der elektrischen Maschine 110. Insbesondere werden die bevorzugten Ausführungen der erfindungsgemäßen Verfahren durch das Steuergerät 112 ausgeführt. Das Steuergerät steuert im Zuge dessen den Feldregler 102, den Stromrichter 106 und das Schaltelement 104 entsprechend der Erfindung an.

Dabei zeigt Figur 3 schematisch ein einphasiges Ersatzschaltbild einer fremderregten Synchronmaschine im Allgemeinen und der fünf-phasigen elektrischen Maschine 110 gemäß Figur 2 im Speziellen. Die Läuferwicklung 101 entspricht in dem Ersatzschaltbild einem Widerstand $R_f$. Die Statorwicklung 110a entspricht in dem Ersatzschaltbild einer Reihenschaltung aus einem Widerstand $R_S$ und einer Induktivität $L_S$.

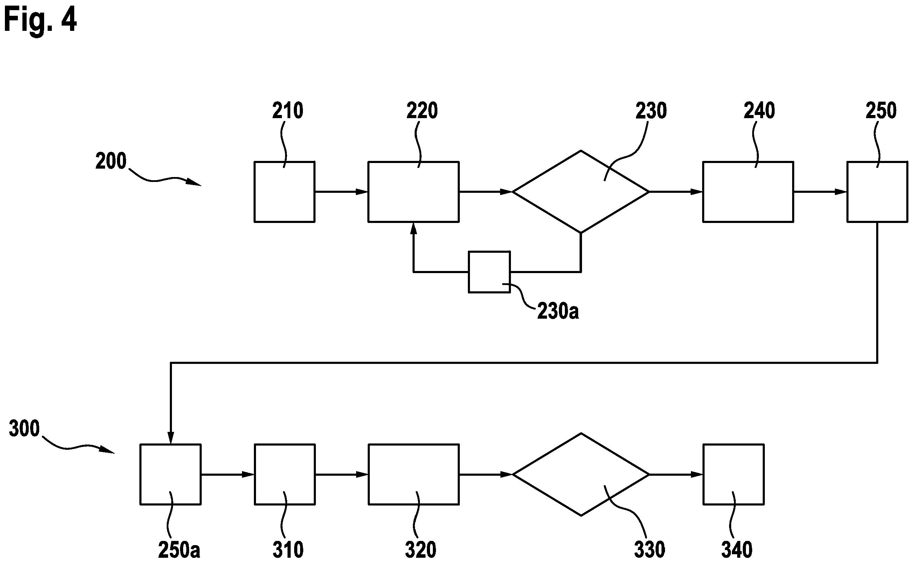

In Figur 4 ist sowohl eine bevorzugte Ausführung eines erfindungsgemäßen Verfahrens zum Einschalten 200 als auch zum Ausschalten 300 der elektrischen Maschine 110 als ein Blockschaltbild dargestellt.

In dem motorischen Betrieb wird die elektrische Maschine 110 mit einer Erregerspannung $U_f$ und der Phasenspannung $U_S$ versorgt und wandelt diese elektrische Energie in mechanische Energie, um die Brennkraftmaschine 109 mit dieser mechanischen Energie zu unterstützen. Die elektrische Maschine 110 ist dabei zunächst ausgeschaltet. Durch die drehmomentschlüssige Verbindung mit der Brennkraftmaschine 109 dreht sich die elektrische Maschine mit einer von der Brennkraftmaschine 109 vorgegebenen Drehzahl ω. Das Einschalten der elektrischen Maschine erfolgt dabei im Zuge des erfindungsgemäßen Verfahrens 200 zum Einschalten der elektrischen Maschine 110.

In einem Schritt 210 wird die Erregerspannung $U_f$ mittels des Feldreglers 102 an die Läuferwicklung 101 angelegt, wodurch in der Läuferwicklung 101 ein Erregerstrom $I_f$ erzeugt wird. Der Erregerstrom $I_f$ wird insbesondere mittels eines PI-Reglers auf einen gewünschten Sollwert geregelt. Da noch keine Phasenspannung $U_S$ an der Statorwicklung 110a der elektrischen Maschine anliegt, induziert der Erregerstrom $I_f$ bei drehender elektrischer Maschine in der Statorwicklung 110a eine Polradspannung $U_p$. Die Polradspannung $U_p$ ist dabei abhängig von der Drehzahl ω und von dem Erregerstrom $I_f$.

In Schritt 220 wird ein diese Polradspannung $U_p$ beeinflussender Parameter bestimmt. Vorzugsweise wird die Polradspannung $U_p$ selbst als der die Polradspannung $U_p$ beeinflussende Parameter bestimmt. Alternativ oder zusätzlich können auch vorzugsweise der Erregerstrom $I_f$ und/oder die Drehzahl ω der elektrischen Maschine 110 als der die Polradspannung $U_p$ beeinflussende Parameter bestimmt werden. Die Drehzahl ω der elektrischen Maschine 110 und der Erregerstrom $I_f$ sind zumeist ohnehin bekannt bzw. werden in dem Kraftfahrzeug ohnehin bestimmt. Daher ist hier kein zusätzlicher Aufwand nötig, um den Erregerstrom $I_f$ und/oder die Drehzahl ω der elektrischen Maschine 110 als den die Polradspannung $U_p$ beeinflussenden Parameter zu bestimmen.

In diesem speziellen Beispiel wird die Polradspannung $U_p$ selbst als der die Polradspannung $U_p$ beeinflussende Parameter bestimmt. Dabei wird die Polradspannung $U_p$ insbesondere in Abhängigkeit von dem Erregerstrom $I_f$ und der Drehzahl ω bestimmt. Diese Bestimmung erfolgt insbesondere nach der folgenden Formel:

$$U_p = \Psi_R \frac{2\pi}{60} \omega$$

$\Psi_R$ ist eine vom Erregerstrom $I_f$ erzeugte Flussverkettung. Aufgrund von Sättigungseffekten ist der Zusammenhang zwischen Erregerstrom $I_f$ und Flussverkettung $\Psi_R$ nicht linear. Insbesondere ist dieser Zusammenhang zwischen Erregerstrom $I_f$ und Flussverkettung $\Psi_R$ als eine Kennlinie oder in Form eines Ausgleichspolynoms hinterlegt, insbesondere in dem Steuergerät 112.

In Schritt 230 wird überprüft, ob die Polradspannung $U_p$ als der die Polradspannung $U_p$ beeinflussende Parameter einen bestimmten Schwellwert erreicht. Der Schwellwert wird dabei derart gewählt, dass bei einem Einschalten der Phasenspannung $U_S$ unerwünschte Stromspitzen und hohe elektrische und mechanische Belastungen vermieden werden. Der Schwellwert wird daher insbesondere in Abhängigkeit von der Phasenspannung $U_S$ gewählt. Der Schwellwert wird demgemäß derart gewählt, dass die Phasenspannung $U_S$ zu einem Zeitpunkt eingeschaltet wird, zu dem die Polradspannung $U_p$ der Phasenspannung $U_S$ nicht entgegenwirkt, was zu hohen elektrischen und mechanischen Belastungen führen würde.

Vorteilhafterweise entspricht der Schwellwert daher einem Spannungswert der Phasenspannung $U_S$ unmittelbar nach dem Einschalten. Dieser Wert wird auch als "aktueller" Wert bezeichnet, obwohl er natürlich vor dem Einschalten nur theoretisch vorliegt. Insbesondere bedeutet dies, dass bei Erreichen des Schwellwerts die Polradspannung $U_p$ und die Phasenspannung $U_S$ unmittelbar nach dem Einschalten dieselbe Höhe bzw. dieselbe Amplitude besitzen. Die Höhe bzw. Amplitude der aktuellen Phasenspannung $U_S$ ist durch die an den Stromrichter 106 angelegte Gleichspannung der Fahrzeugbatterie 105 vorgegeben.

Solange die Polradspannung $U_p$ kleiner ist als die Phasenspannung $U_S$, kann kein Phasenstrom $I_S$ über die Inversdioden der MOSFETs 106a des Stromrichters 106 fließen.

Die Höhe bzw. Amplitude der Polradspannung $U_p$ lässt sich über den Erregerstrom $I_f$ einstellen. Erreicht die Polradspannung $U_p$ nicht den Schwellwert, kann in einem Schritt 230a der Erregerstrom $I_f$ daher zweckmäßig verändert werden. Die Polradspannung $U_p$ wird dann gemäß Schritt 220 erneut bestimmt und die Überprüfung gemäß Schritt 230 wird erneut durchgeführt.

Erreicht die Polradspannung $U_p$ den Schwellwert, besitzen Polradspannung $U_p$ und Phasenspannung $U_S$ unmittelbar nach dem Einschalten also dieselbe Amplitude, wird in Schritt 240 die Phasenspannung $U_S$ eingeschaltet. Dabei wird an die Phasenanschlüsse 107 der Statorwicklung 110a die fünf-phasige Phasenspannung $U_S$ angelegt, insbesondere durch den Stromrichter 106. Die Phasenspannung $U_S$ wird dabei in Phase mit der Polradspannung $U_p$ eingeschaltet. Der Erregerstrom $I_f$ besitzt dabei einen Wert, der eine Polradspannung $U_p$ erzeugt, deren Amplitude der von außen angelegten Phasenspannung $U_S$ entspricht.

Wird alternativ der Erregerstrom $I_f$ in Schritt 220 als der die Polradspannung $U_p$ beeinflussende Parameter bestimmt, wird ein entsprechender Wert des Erregerstroms $I_f$ als der Schwellwert genutzt. Weicht der Erregerstrom $I_f$ in Schritt 230 von dem Schwellwert ab, wird der Erregerstrom $I_f$ in Schritt 230a zweckmäßig verändert, in Schritt 220 erneut bestimmt und in Schritt 230 erneut überprüft, ob der Schwellwert erreicht ist.

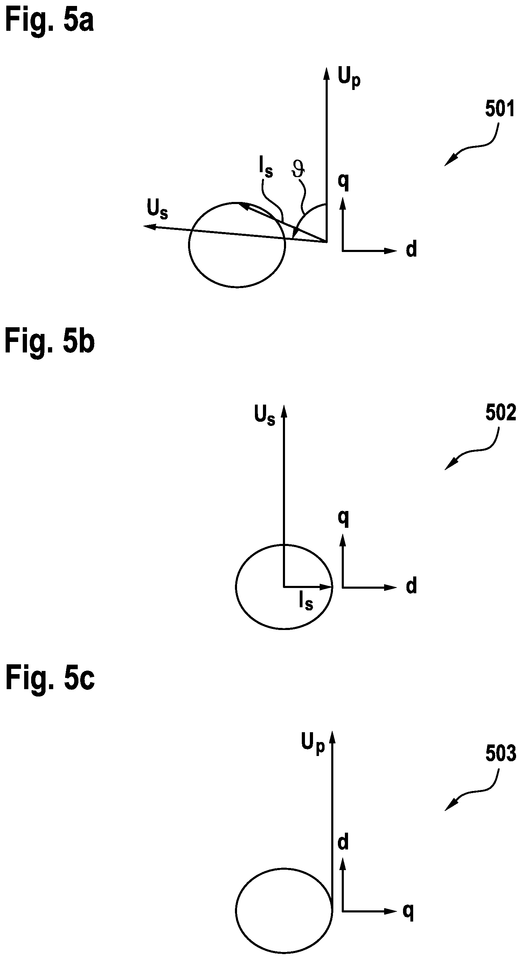

Ein Zusammenhang zwischen den Phasenspannung $U_S$, der Polradspannung $U_p$, dem Phasenstrom $I_S$ und dem Erregerstrom $I_f$ und damit der theoretische Hintergrund der erfindungsgemäßen Verfahren werden anhand von Figur 5 genauer erläutert.

In Figur 5 sind dabei Zeigerdiagramme bzw. dq-Diagramme 501 bis 503 einer fremderregten Synchronmaschine, insbesondere der fünf-phasigen elektrischen Maschine 110 gemäß Figur 2, in einem drehfeldfesten dq-Koordinatensystem beispielhaft dargestellt, wie sie im Zuge einer Ausführungsform der Erfindung bestimmt werden können.

Die Polradspannung $U_p$ liegt dabei definitionsgemäß auf der q-Achse und ist als ein erster Zeiger dargestellt. Die q-Achse bildet die sogenannte Erregerachse. Die d-Achse ist dabei elektrisch orthogonal zu der q-Achse. Die Phasenspannung $U_S$ ist als ein zweiter Zeiger dargestellt und ist um einen Phasenwinkel $\vartheta$ gegenüber der Polradspannung $U_p$ verschoben. Der Phasenwinkel $\vartheta$ wird auch als Ansteuerwinkel, Polradwinkel oder Lastwinkel bezeichnet. Im generatorischen Betrieb der elektrischen Maschine 110 nimmt der Phasenwinkel $\vartheta$ positive Werte an, ein Polrad bzw. der Erreger "eilt voraus". Im motorischen Betrieb der elektrischen Maschine 110, wie er in Figur 5 dargestellt ist, nimmt der Phasenwinkel $\vartheta$ negative Werte an, das Polrad bzw. der Erreger "eilt nach".

Die Höhe der Phasenspannung $U_S$ ist durch die an den Stromrichter 106 angelegte Gleichspannung der Fahrzeugbatterie 105 vorgegeben. Die Phasenspannung $U_S$ lässt sich daher nur in ihrer Phasenlage bezüglich der Polradspannung $U_p$ variieren, also über ihren Phasenwinkel $\vartheta$ gegenüber der Polradspannung $U_p$. Die Phasenlage bzw. Phasenwinkel $\vartheta$ kann mittels des Stromrichters 106 zweckmäßig eingestellt werden.

Der Phasenstrom $I_S$ ist in dem dq-Koordinatensystem als ein dritter Vektor dargestellt. Je nach Phasenlage bzw. Phasenwinkel $\vartheta$ ergibt sich ein unterschiedlicher Phasenstrom $I_S$. Der Phasenstrom $I_S$ bzw. der Vektor bzw. die Spitze des Vektors des Phasenstrom $I_S$ beschreibt einen Kreis in dem dq-Koordinatensystem.

In Figur 5a ist ein erstes dq-Diagramm 501 dargestellt, wobei die Polradspannung $U_p$ als der die Polradspannung $U_p$ beeinflussende Parameter nicht den Schwellwert erreicht. Dabei ist zu erkennen, dass für keinen Phasenwinkel $\vartheta$ der Phasenstrom $I_S$ zu Null wird. Ein Einschalten der elektrischen Maschine 110 ohne Überschwingen ist dabei nicht möglich.

In Figur 5b ist ein zweites dq-Diagramm 502 dargestellt, wobei der Erregerstrom $I_f$ ausgeschaltet ist, also den Wert Null hat. Demgemäß besitzt auch die Polradspannung $U_p$ den Wert Null. Auch hier ist zu erkennen, dass für keinen Phasenwinkel $\vartheta$ der Phasenstrom $I_S$ zu Null wird. Auch in diesem Fall ist ein Einschalten der elektrischen Maschine 110 ohne Überschwingen nicht möglich.

In Figur 5c ist ein drittes dq-Diagramm 503 dargestellt, wobei die Polradspannung $U_p$ als der die Polradspannung $U_p$ beeinflussende Parameter den Schwellwert erreicht. Der Phasenwinkel $\vartheta$ beträgt dabei 90°, so dass die Phasenlage der Phasenspannung $U_S$ einer Phasenlage der Polradspannung $U_p$ entspricht. Da Phasenspannung $U_S$ und Polradspannung $U_p$ nach Betrag und Phase gleich groß sind, wird dabei kein Phasenstrom $I_S$ erzeugt.

Indem in Schritt 240 die Phasenspannung $U_S$ eingeschaltet wird, ist die elektrische Maschine 110 eingeschaltet und kann die Brennkraftmaschine 109 unterstützen. Vorteilhafterweise wird nun in Schritt 250 ein Drehmoment der elektrischen Maschine 110 bzw. der Brennkraftmaschine 109 eingestellt. Das Drehmoment wird dabei durch Variation des Phasenwinkels $\vartheta$ eingestellt. Über einen zweckmäßigen Regelkreis wird der Phasenwinkels $\vartheta$ so variiert, dass ein gewünschtes Drehmoment eingestellt wird.

Soll die elektrische Maschine 110 wieder ausgeschaltet werden, erfolgt dies im Zuge des erfindungsgemäßen Verfahrens 300 zum Ausschalten der elektrischen Maschine 110.

In Schritt 250a werden dabei, analog zu Schritt 250, das Drehmoment und der Phasenwinkels $\vartheta$ auf einen bestimmten Wert eingestellt. Das Drehmoment wird dabei in Schritt 250a auf einen minimalen Wert eingestellt, insbesondere auf den Wert Null. Der Phasenwinkel $\vartheta$ wird dabei insbesondere auf den Wert 90° eingestellt. Damit liegt die Phasenspannung $U_S$ in Phase mit der Polradspannung $U_p$, es wird der geringste mögliche Phasenstrom $I_S$ erzeugt. Dabei handelt es sich insbesondere um einen reinen Blindstrom.

In Schritt 310 wird der Erregerstrom $I_f$ abgeschaltet. Der Feldregler 102 trennt die Läuferwicklung 101 von der angelegten Erregerspannung $U_f$. Aufgrund einer Zeitkonstanten des Erregerkreises klingt der Erregerstrom $I_f$ langsam ab.

In Schritt 320 wird, analog zu Schritt 220, der die Polradspannung $U_p$ beeinflussende Parameter bestimmt. In diesem speziellen Beispiel wird in Schritt 320 vorzugsweise die Polradspannung $U_p$ selbst als der die Polradspannung $U_p$ beeinflussende Parameter bestimmt. Die Polradspannung $U_p$ wird dabei insbesondere in Abhängigkeit von dem Erregerstroms $I_f$ und von der Drehzahl $\omega$ bestimmt.

In Schritt 330 wird überprüft, ob die Polradspannung $U_p$ als der die Polradspannung $U_p$ beeinflussende Parameter den Schwellwert erreicht. Auch in diesem Fall beträgt der Schwellwert bevorzugt den aktuellen Spannungswert der Phasenspannung $U_S$. Bevorzugt wird überprüft, ob die Polradspannung $U_p$ den aktuellen Spannungswert der Phasenspannung $U_S$ unterschreitet. Ist dies der Fall, wird der Phasenstrom $I_S$ zu Null.

Würde die Polradspannung $U_p$ bei eingeschalteter Ansteuerung des Stromrichters 106 weiter reduziert, würde der Phasenstrom $I_S$ in positiver d-Richtung wieder ansteigen. Die Ermittlung des geeigneten Abschaltzeitpunktes der Phasenspannung $U_S$ kann alternativ oder zusätzlich auch durch Erfassen des Phasenstroms $I_S$ als der die Polradspannung $U_p$ beeinflussende Parameter erfolgen. Insbesondere wird dabei überprüft, ob der Phasenstroms $I_S$ einen Schwellwert erreicht.

Erreicht die Polradspannung $U_p$ als der die Polradspannung $U_p$ beeinflussende Parameter den Schwellwert, besitzt die Polradspannung $U_p$ also bevorzugt den aktuellen Spannungswert der Phasenspannung $U_S$, wird in Schritt 340 die Phasenspannung $U_S$ ausgeschaltet. Dabei trennt der Stromrichter 106 die Phasenanschlüsse 107 der Statorwicklung 110a von der fünfphasigen Phasenspannung $U_S$. Alternativ oder zusätzlich kann die Ansteuerung des Stromrichters 106 deaktiviert werden.

Das Abschalten der Phasenspannung $U_S$ erfolgt in einem stromlosen Zustand. Der Erregerstrom $I_f$ besitzt zwar noch einen von Null verschiedenen Wert, jedoch kann der Erregerstrom $I_f$ keinen Stromfluss durch die Inversdioden des Stromrichters 106 mehr erzeugen.

**Patentansprüche**

1. Verfahren zum Einschalten einer n-phasigen elektrischen Maschine (110) in einem Kraftfahrzeug, wobei die n-phasige elektrische Maschine (110)

   - einen Läufer mit einer Läuferwicklung (101) aufweist und
   - einen Stator mit einer n-phasigen Statorwicklung (110a) aufweist, wobei
   - an den Läufer ein Erregerstrom ($I_f$) angelegt werden kann und
   - an den Stator eine n-phasige Phasenspannung ($U_S$) angelegt werden kann, wobei
   - der Erregerstrom ($I_f$) eingeschaltet wird (210),
   - ein eine Polradspannung ($U_p$) beeinflussender Parameter bestimmt wird (220) und
   - die Phasenspannung ($U_S$) eingeschaltet wird (240), wenn der die Polradspannung ($U_p$) beeinflussende Parameter einen bestimmten Schwellwert erreicht.

2. Verfahren nach Anspruch 1, wobei, wenn die Phasenspannung (Us) eingeschaltet ist, ein Drehmoment mittels eines Phasenwinkels ($\vartheta$) der Phasenspannung ($U_S$) eingestellt wird (250).

3. Verfahren zum Ausschalten einer n-phasigen elektrischen Maschine (110) in einem Kraftfahrzeug, wobei die n-phasige elektrische Maschine (110)

   - einen Läufer mit einer Läuferwicklung (101) aufweist und
   - einen Stator mit einer n-phasigen Statorwicklung (101a) aufweist, wobei
   - an den Läufer ein Erregerstrom ($I_f$) angelegt werden kann und
   - an den Stator eine n-phasige Phasenspannung (Us) angelegt werden kann, wobei
   - der Erregerstrom ($I_f$) ausgeschaltet wird (310),
   - ein eine Polradspannung ($U_p$) beeinflussender Parameter bestimmt wird (320) und
   - die Phasenspannung ($U_S$) ausgeschaltet wird (340), wenn der die Polradspannung ($U_p$) beeinflussende Parameter einen bestimmten Schwellwert erreicht.

4. Verfahren nach Anspruch 3, wobei, bevor der Erregerstrom ($I_f$) ausgeschaltet wird (310), ein Drehmoment mittels eines Phasenwinkels (0) der Phasenspannung ($U_S$) auf einen bestimmten Wert eingestellt wird (250a).

5. Verfahren nach Anspruch 4, wobei das Drehmoment auf Null eingestellt wird (250a).

6. Verfahren nach einem der vorstehenden Ansprüche,

wobei die Polradspannung ($U_p$) als der die die Polradspannung ($U_p$) beeinflussende Parameter bestimmt wird (220, 320).

7. Verfahren nach Anspruch 6, wobei der bestimmte Schwellwert der Polradspannung ($U_p$) als der die die Polradspannung ($U_p$) beeinflussende Parameter einem aktuellen Spannungswert der Phasenspannung ($U_S$) entspricht.

8. Verfahren nach einem der vorstehenden Ansprüche, wobei der Erregerstrom ($I_f$) und/oder die Drehzahl der elektrischen Maschine (110) als der die die Polradspannung ($U_p$) beeinflussende Parameter bestimmt wird (220, 320).

9. Verfahren nach einem der vorstehenden Ansprüche, wobei die elektrische Maschine (110) motorisch oder generatorisch betrieben wird.

10. Recheneinheit (112), die durch ein auf einem Datenträger bereitgestelltes Computerprogramm dazu eingerichtet ist, ein Verfahren nach Anspruch 1 durchzuführen.

11. Computerprogramm, das eine Recheneinheit (112) dazu veranlasst, ein Verfahren nach einem der Ansprüche 1 bis 9 durchzuführen, wenn es auf der Recheneinheit (112), insbesondere nach Anspruch 10, ausgeführt wird.

12. Maschinenlesbares Speichermedium mit einem darauf gespeicherten Computerprogramm nach Anspruch 11.

**Claims**

1. Method for switching on an n-phase electric machine (110) in a motor vehicle, wherein the n-phase electric machine (110)

    - has a rotor comprising a rotor winding (101) and
    - has a stator comprising an n-phase stator winding (110a), wherein
    - a field current (If) can be applied to the rotor and
    - an n-phase phase voltage (US) can be applied to the stator, wherein
    - the field current (If) is switched on (210),
    - a parameter that influences a rotor voltage (Up) is determined (220) and
    - the phase voltage ($U_S$) is switched on (240) when the parameter that influences the rotor voltage ($U_p$) reaches a determined threshold value.

2. Method according to Claim 1, wherein, when the phase voltage (Us) is switched on, a torque is set (250) by means of a phase angle (ϑ) of the phase voltage (Us).

3. Method for switching off an n-phase electric machine (110) in a motor vehicle, wherein the n-phase electric machine (110)

    - has a rotor comprising a rotor winding (101) and
    - has a stator comprising an n-phase stator winding (110a), wherein
    - a field current (If) can be applied to the rotor and
    - an n-phase phase voltage (Us) can be applied to the stator, wherein
    - the field current (If) is switched off (310),
    - a parameter that influences a rotor voltage (Up) is determined (320) and
    - the phase voltage (US) is switched off (340) when the parameter that influences the rotor voltage ($U_p$) reaches a determined threshold value.

4. Method according to Claim 3, wherein, before the field current ($I_f$) is switched off (310), a torque is set (250a) to a determined value by means of a phase angle (ϑ) of the phase voltage ($U_S$).

5. Method according to Claim 4, wherein the torque is set (250a) to zero.

6. Method according to one of the preceding claims, wherein the rotor voltage ($U_p$) is determined (220, 320) as the parameter that influences the rotor voltage ($U_p$).

7. Method according to Claim 6, wherein the determined threshold value of the rotor voltage ($U_p$) as the parameter that influences the rotor voltage ($U_p$) corresponds to a present voltage value of the phase voltage (Us).

8. Method according to one of the preceding claims, wherein the field current ($I_f$) and/or the rotational speed of the electric machine (110) is determined (220, 320) as the parameter that influences the rotor voltage ($U_p$) .

9. Method according to one of the preceding claims, wherein the electric machine (110) is operated by motor or by generator.

10. Computation unit (112), which is configured by a computer program provided on a data carrier to carry out a method according to Claim 1.

11. Computer program, which prompts a computation unit (112) to carry out a method according to one of Claims 1 to 9 when said computer program is executed on the computation unit (112), in particular according to Claim 10.

**12.** Machine-readable storage medium comprising a computer program according to Claim 11 stored thereon.

## Revendications

**1.** Procédé de mise en circuit d'une machine électrique (110) à n phases dans un véhicule automobile, la machine électrique (110) à n phases

- possédant un rotor muni d'un enroulement de rotor (101) et
- possédant un stator muni d'un enroulement de stator (110a) à n phases,
- un courant d'excitateur (If) pouvant être appliqué au rotor et
- une tension de phase ($U_s$) à n phases pouvant être appliquée au stator,
- le courant d'excitateur ($I_f$) étant mis en circuit (210),
- un paramètre qui influence une tension de roue polaire ($U_p$) étant défini (220) et
- la tension de phase (Us) étant mise en circuit (240) lorsque le paramètre qui influence la tension de roue polaire ($U_p$) atteint une valeur de seuil définie.

**2.** Procédé selon la revendication 1, un couple étant réglé (250) au moyen d'un angle de phase ($\vartheta$) de la tension de phase (Us) lorsque la tension de phase (Us) est mise en circuit.

**3.** Procédé de mise hors circuit d'une machine électrique (110) à n phases dans un véhicule automobile, la machine électrique (110) à n phases

- possédant un rotor muni d'un enroulement de rotor (101) et
- possédant un stator muni d'un enroulement de stator (110a) à n phases,
- un courant d'excitateur ($I_f$) pouvant être appliqué au rotor et
- une tension de phase ($U_S$) à n phases pouvant être appliquée au stator,
- le courant d'excitateur ($I_f$) étant mis hors circuit (310),
- un paramètre qui influence une tension de roue polaire ($U_p$) étant défini (320) et
- la tension de phase ($U_S$) étant mise hors circuit (340) lorsque le paramètre qui influence la tension de roue polaire ($U_p$) atteint une valeur de seuil définie.

**4.** Procédé selon la revendication 3, un couple étant réglé à une valeur définie (250a) au moyen d'un angle de phase ($\vartheta$) de la tension de phase ($U_S$) avant que le courant d'excitateur ($I_f$) soit mis hors circuit (310).

**5.** Procédé selon la revendication 4, le couple étant réglé à zéro (250a).

**6.** Procédé selon l'une des revendications précédentes, la tension de roue polaire ($U_p$) étant définie (220, 320) en tant que paramètre qui influence la tension de roue polaire ($U_p$).

**7.** Procédé selon la revendication 6, la valeur de seuil définie de la tension de roue polaire ($U_p$) en tant que paramètre qui influence la tension de roue polaire ($U_p$) correspondant à une valeur de tension actuelle de la tension de phase ($U_S$).

**8.** Procédé selon l'une des revendications précédentes, le courant d'excitateur ($I_f$) et/ou la vitesse de rotation de la machine électrique (110) étant définis (220, 320) en tant que paramètre qui influence la tension de roue polaire ($U_p$).

**9.** Procédé selon l'une des revendications précédentes, la machine électrique (110) fonctionnant en régime de moteur ou en régime de générateur.

**10.** Unité de calcul (112) qui, par un programme informatique fourni sur un support de données, est conçue pour mettre en oeuvre un procédé selon la revendication 1.

**11.** Programme informatique qui amène une unité de calcul (112) à mettre en oeuvre le procédé selon l'une des revendications 1 à 9 lorsqu'il est exécuté sur l'unité de calcul (112), notamment selon la revendication 10.

**12.** Support d'enregistrement lisible par machine sur lequel est enregistré un programme informatique selon la revendication 11.

**Fig. 1**

EP 3 028 378 B1

# Fig. 2

EP 3 028 378 B1

# Fig. 3

# Fig. 4

EP 3 028 378 B1

## Fig. 5a

## Fig. 5b

## Fig. 5c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4746850 A